# EUROPEAN PATENT SPECIFICATION

(11) **EP 1 184 206 B1**
(45) Date of publication and mention of the grant of the patent: **03.01.2007**
(21) Application number: 01119684.7
(22) Date of filing: 23.08.2001
(51) Int. Cl.: B60C 11/01

(54) **Truck tire**
LKW-Reifen
Bandage pneumatique pour poids-lourds

(30) Priority: 31.08.2000 US 653240
(43) Date of publication of application: 06.03.2002
(73) Proprietor: THE GOODYEAR TIRE & RUBBER COMPANY, Akron, Ohio 44316-0001 (US)
(72) Inventor: Young, Austin Gale, Copley, Ohio 44321 (US); Young, Deborah Lynn, Copley, Ohio 44321 (US); Goldstein, Arthur Allen, Mayfield Village, Ohio 44143 (US)
(74) Representative: Kutsch, Bernd

(56) References cited:
- EP-A- 0 319 860
- DE-A- 1 480 933
- US-A- 3 508 594
- US-A- 5 660 652

## Description

### Background of the Invention

The present invention relates to truck tires for steer axles.

The use of treads specifically designed for the steer axle of truck tires has been directed to various forms of rib-type tires. This nondriving axle exhibits cornering and turning loads as well as straight line running loads. Some skilled in the art believe the tread ribs should ideally have a sharp edge adjacent to the circumferential grooves to provide improved handling.

These sharp edges during normal use can exhibit irregular tread wear. High wear erosion is common in the shoulder region of the tread. This problem was addressed in US-A- 4,480,671 issued November 6, 1984, to Giron. As shown in Figure 2, Giron disclosed the use of a laterally located circumferentially continuous rib 4 that under normal driving conditions is in contact with the road. The force or pressure exerted by the rib 4 on the road being less than the force or pressure of the shoulder rib 6. This prior art tire 2 relied on the laterally located rib to protect the sharp edge of the shoulder rib.

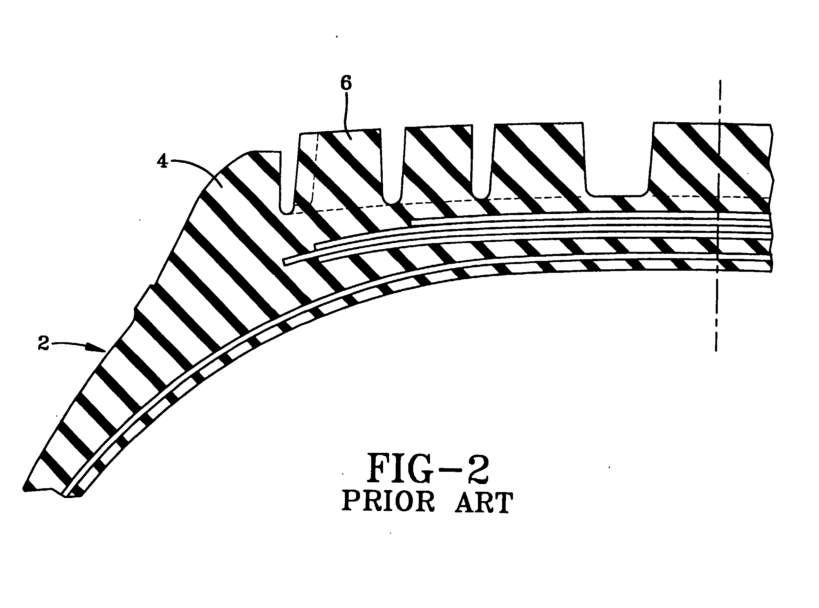

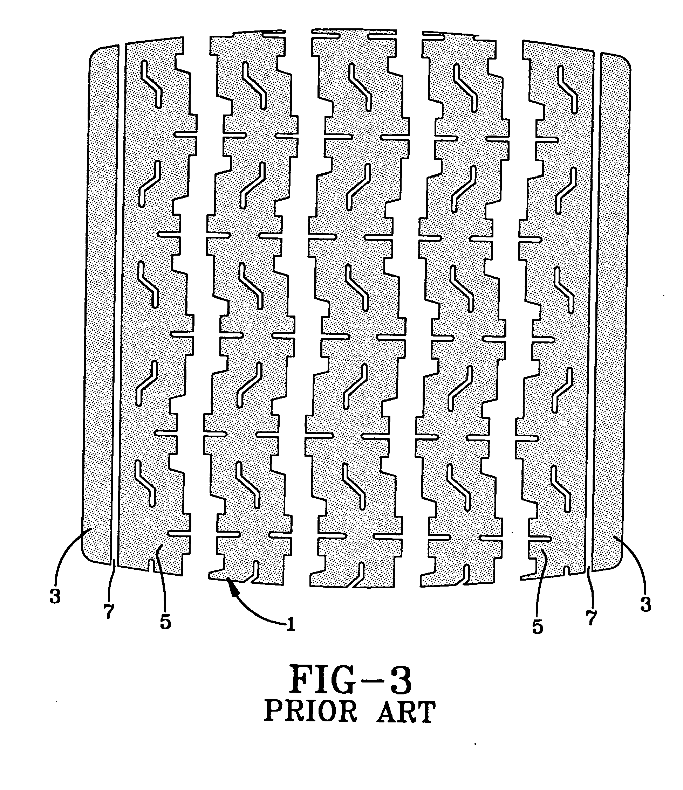

An alternative design approach was to have a nonrecessed circumferential rib 3 adjacent a narrow circumferentially continuous groove 7 and shoulder rib 5. Such a tire was commercially sold as the Goodyear G259 steer tire and that tire 1 exhibits a static footprint or tread contact patch as shown in Figure 3.

Yet another design approach was demonstrated by Bridgestone Tire & Rubber Company's R227 Steer Tire which has a narrow circumferentially continuous bent groove in the side of a shoulder rib. The narrow bent groove creates reduced shoulder pressure and acts as a decoupling groove as is taught in US-A- 4,995,437.

All of these design approaches rely on a feature provided in the tread. These features will effectively reduce shoulder wear when the tread is new. This has the remarkable benefit of inhibiting the onset of irregular wear. The tread shoulder is most prone to setting up irregular wear when the tread is new and is at a maximum tread thickness.

What is troubling though is that the decoupling ribs in the tread are prone to tearing and cutting while the decoupling groove can be prone to stone holding. As a result, this portion of the tread is potentially vulnerable to damage when the tire strikes a curb or other hard obstruction.

Another problem associated with the use of decoupling grooves in a tread is the inability to reliably reconstruct a good decoupling groove in a retreaded tire. In the past, it has been common practice to not use retreaded tire casings in a steer tire application. Accordingly, steer tires when worn are retreaded with a tread design suitable for use on a drive axle or a trailer axle position. These wheel positions do not experience shoulder wear problems at least to the degree that is associated with a steer axle.

Recent breakthroughs in retreading tires and in the ability to inspect tire casings makes it clear that in the not too distance future the retreading of commercial truck tire casings for the steer axle position will become an acceptable, if not the preferred practice.

In order to insure that the tread is effectively decoupled from the sidewall, that is the tread shoulder remains somewhat independent of the forces exerted by the sidewall, a new and vastly improved way of decoupling must be provided.

The present invention provides a way to effectively decouple the tread shoulder without providing any decoupling ribs or grooves in the tread.

The effective decoupling of the tread shoulder occurs in the upper shoulder region of the casing at a location radially aligned or preferably inward of the belt structure and thus below a tread buff line when the tire casing is prepared for retreading.

EP-A- 0319860 discloses a pneumatic tire according to the preamble of claim 1.

DE-A- 1480933 discloses a tire having a plurality of circumferential grooves in the shoulder area of the tire.

### Summary of the Invention

A pneumatic radial ply truck tire for use on the steering axles is described. The tire has a tread and a casing. The casing has two sidewalls, one or more radial plies extending to two annular beads and a belt reinforcement structure located radially between the tread and the casing plies.

The tire has a tread and a pair of sidewalls. The tread has a pair of shoulder tread ribs. Each shoulder rib has an axially outer treadwall.

The sidewalls are an elastomeric material, preferably rubber, covering the exterior sides of the casing. One sidewall extends radially inwardly from each shoulder rib toward each radially inner bead. Each sidewall has at least two, preferably three or more, circumferentially continuous tread decoupling grooves located radially at or inward of the belt reinforcing structure. In one embodiment of the invention, at least one of the decoupling grooves extend generally laterally inwardly a distance sufficient to be axially inward of the axially outer treadwall of the tread as measured at the radially outer surface of the shoulder rib. Alternatively in a preferred embodiment each decoupling groove lies axially outward of the axially outer treadwall.

In a preferred embodiment the tire, when normally loaded and inflated to the design inflation pressure P_{N}, has a tread contact pressure wherein each shoulder rib exhibits a contact pressure less than or equal to the inflation pressure P_{N}, as measured from an axial centerline C equidistant between the leading edge and trailing edge of the tread contact patch. At the equatorial or circumferential centerplane of the tread, the tread contact patch has an average circumferential length L_{C}, L_{C} being greater than or equal to the shoulder rib contact circumferential length L_{S}, The preferred embodiment tire has a plurality of central ribs adjacent circumferential grooves, each central rib has an axial width W_{C}, W_{C} can be different in each rib or the same width and wherein each shoulder rib has an axial width W_{S}, W_{S} being at least 110% of W_{C}.

### Brief Description of the Drawings

Figure 1 is a cross-sectional view of the tire 10 according to the present invention.
Figure 2 is a partial cross-sectional view of a prior art tire 2 disclosed in US-A- 4,480,671.
Figure 3 is an exemplary static footprint of a prior art tire 1 commercially sold as the Goodyear G259.
Figure 4 is an illustration of a prior art exemplary G259 tire footprint exhibiting shoulder rib cupping after 100,000 miles of use.
Figure 5 is an exemplary tire footprint of the present invention depicting the pressure distribution of the tire as molded.
Figure 6 is a cross-section of one-half of the tire of the preferred tire according to the invention.
Figure 7 is a cross-section of an alternative embodiment tire of the present invention.

### Definitions

"Apex" means an elastomeric filler located radially above the bead core and between the plies and the turnup ply.

"Bead" means that part of the tire comprising an annular tensile member wrapped by or otherwise anchored by ply cords and shaped, with or without other reinforcement elements such as flippers, chippers, apexes, toe guards and chafers, to fit the design rim.

"Belt Structure" means at least two annular layers or plies of parallel cords, woven or unwoven, underlying the tread, unanchored to the bead, and having both left and right cord angles in the range from 15° to 68° with respect to the circumferential centerline of the tire.

"Casing" means the carcass, belt structure, beads, sidewalls, and all other components of the tire excepting the tread and undertread. The casing may be new, unvulcanized rubber or previously vulcanized rubber to be fitted with a new tread.

"Chafers" refers to narrow strips of material placed around the outside of the bead to protect cord plies from the rim, distribute flexing above the rim, and to seal the tire.

"Circumferential" means lines or directions extending along the perimeter of the surface of the annular tread perpendicular to the axial direction.

"Cord" means one of the reinforcement strands of which the belts and plies in the tire are comprised.

"Lateral" means an axial direction.

"Ply" means a continuous layer of elastomeric rubber-coated parallel cords.

"Radial" and "radially" mean directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Shoulder" means the upper portion of sidewall just below the tread edge; tread shoulder or shoulder rib means that portion of the tread near the shoulder.

"Sidewall" means that portion of a tire between the tread and the bead.

"Tread" means a rubber or elastomeric component including that portion of the tire that comes into contact with the road under normal inflation and load.

### Detailed Description of the Preferred Embodiment

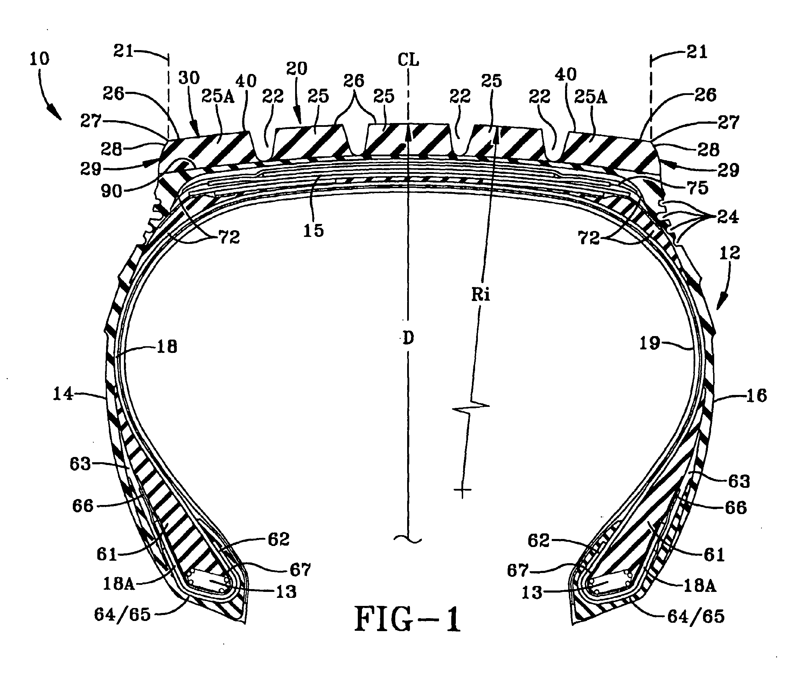

With reference to Fig. 1, a cross section of the pneumatic radial tire 10 for use on steering axles is illustrated.

The tire 10 has a tread 20 and a casing 12. The casing 12 has two sidewalls 14,16 one or more radial plies 18 extending from and preferably wrapped about or otherwise secured to two annular beads 13 and a belt reinforcement structure 15 located radially between the tread 20 and the plies 18.

The plies 18 and the belt reinforcement structure 15 are cord reinforced elastomeric material, the cords being preferably steel wire filaments and the elastomer preferably being a vulcanized rubber material. Similarly, the annular beads 13 have steel wires wrapped into a bundle known as the bead core.

A liner 19 component of preferably halobutyl rubber forms a somewhat air impervious chamber to contain the air pressure when the tire 10 is inflated.

The casing 12 of the preferred embodiment of the invention, as illustrated in Fig. 1, employed a bead 13 having an 8x10x9 hexagonal bead core having an elastomeric apex 61 radially above the bead 13. The ply turnup 18A in the bead area was reinforced with a flipper 67, chipper 62, gum and fabric chafers 64,65, gum strips 66 and elastomeric wedges 63.

Additionally, the belt reinforcement structure 15 included gum strip of rubber material 75 and a plurality of elastomeric strips or wedges 72 in the lateral extremes of the belts 15 in proximity of the decoupling grooves 24. Although not required to the practice of the inventive concept, these features are disclosed as features employed in the preferred embodiment.

The tread 20 has a plurality of circumferentially continuous grooves 22 and a plurality of tread ribs 25, including a pair of shoulder ribs 25A, one shoulder rib 25A being adjacent each lateral edge 21 of the tread 20.

The distance halfway between the lateral edges 21 of the tread defines the circumferential centerline CL of the tread 20.

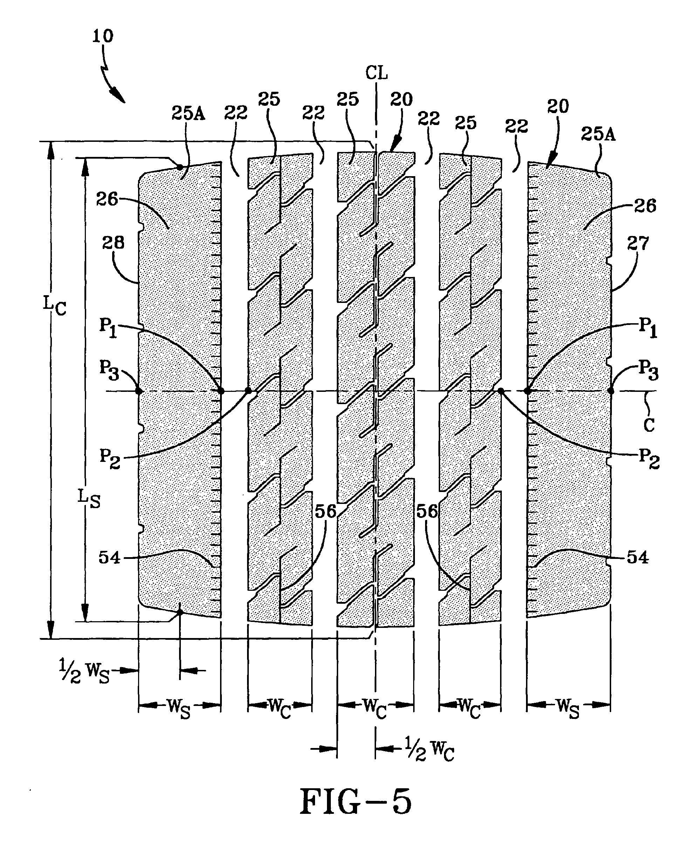

The radially outer road contacting surfaces 26 of the plurality of tread ribs 25, 25A define a radially outer tread surface 30. The outer tread surface 30 is adjacent to and extends between the pair of lateral edges 21. A plurality of sipes or incisions 54 and 56 are preferably employed on the tread 20 as shown in Figure 5.

As shown in Fig. 1, two or more circumferential decoupling grooves 24 are radially inward each shoulder rib 25A.

As shown in Fig. 5, the tread 20, when new, exhibits a static footprint pressure distribution when the tire is normally loaded, such that the pressure exerted along the axial centerline C of the footprint on the shoulder rib 25A adjacent the lateral edge 21 is P3, on the shoulder rib 25A adjacent the circumferential groove 22 is P1, on the rib 25 laterally adjacent the shoulder rib 25A at the groove 22 is P2. The relationship of the pressure distribution in P1 is about equal to P2; and about equal to P3.

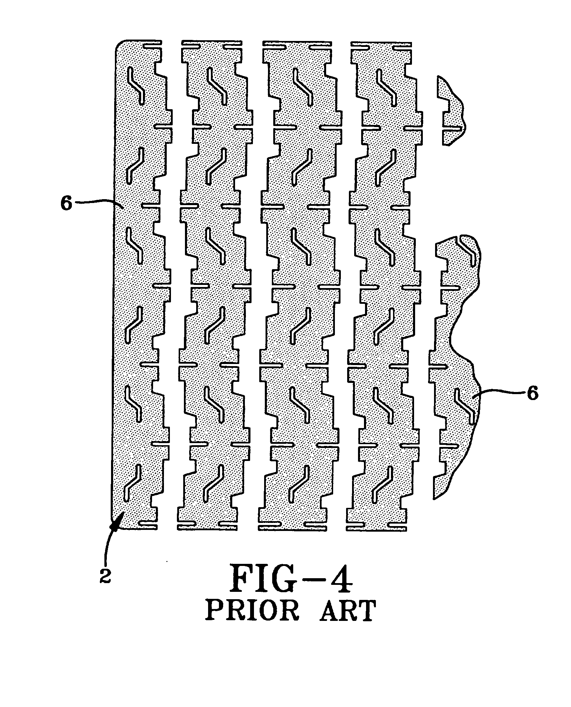

As shown in Figure 4, a prior art tire 1, the G259 after 100,000 miles (160,000 km) of wear can exhibit considerable cupping wear in the shoulder rib region 2. The decoupling or recessed lateral rib 6 is noticeably worn away from road contact at this wear condition. The tire 10 according to the preferred embodiment of the invention, as illustrated in Fig. 1, has a much more uniform wear in the same shoulder regions of the tread 20. Both the prior art tire 1 and the test tires 10 were of similar size, 295/75R22.5 and 11R22.5, and similarly loaded and inflated during the evaluations.

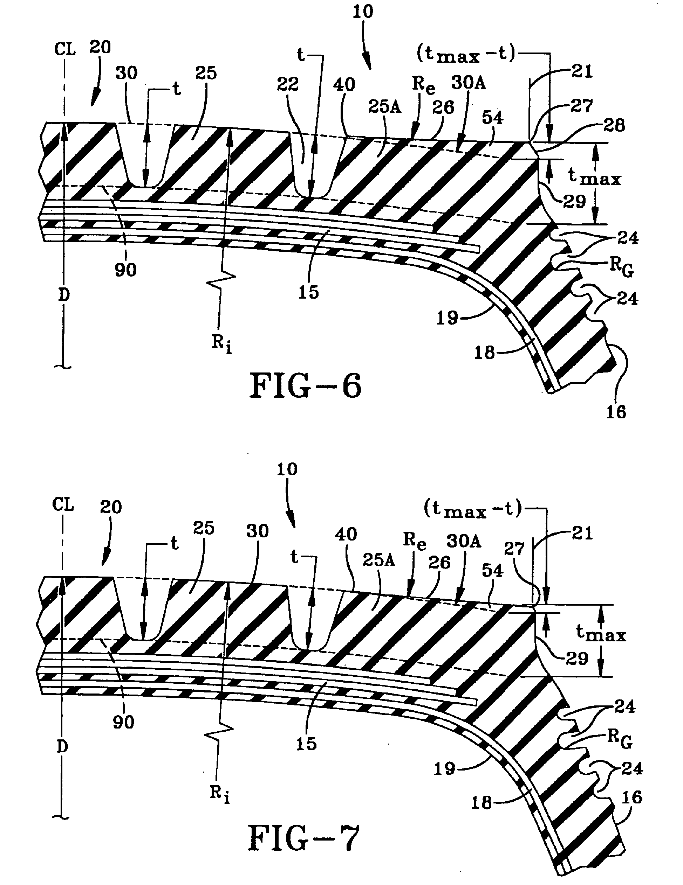

As shown in Figures 6 and 7, the above-described pressure distribution exhibited by tire 10 is achieved by effectively progressively increasing the width W_{S} of the tread shoulder rib 25A from the point 40 of the change in curvature to the lateral edge 21. This added rubber area effectively provides more material in an area of high wear propensity and decreases the pressure in the area by spreading the load over a wider rib. The area directly above or adjacent the decoupling grooves improves the maintenance of the sharp edge 27 of the shoulder rib 25A.

Interestingly an upper limit in the amount of pressure change must be maintained wherein P3 should not exceed P1 by 20%, preferably 10% or less. If too much rubber is added to the shoulder rib 25A above the decoupling grooves 24, the area adjacent the circumferential groove 22 can become too lightly loaded. When this condition occurs a phenomena known as erosion wear or river wear can occur adjacent the groove 22. To prevent this problem from occurring a balance must be maintained. Ideally, both edges across the shoulder ribs 25A wear at the same uniform rate. This condition achieves a most beneficial projected mileage life of the tread.

To facilitate an understanding of the progression change in thickness, the region of the radially outer tread surface 30 defined by the radius of curvature Ri has been extended as shown by the dashed line 30A on Figures 6 and 7. The difference between the curvature defined by Ri and the actual outer tread surface 30 define by the curvature Re in the shoulder region can thus be easily appreciated as shown in Figures 6 and 7.

In the tire of Fig. 1 the tread radius of curvature Rᵢ was selected to be about 29 inches (74 cm). A single radius Rᵢ provides a simple mold shape. Alternatively multiple radii of curvature Rᵢ can be used. In those cases the radius Rᵢ nearest the centerplane CL can be about 25 inches (64 cm) and radii near to the shoulder preferably is substantially larger except at the shoulders lateral edge wherein the radius Rᵢ can be very round (i.e. small). All of these tread shapes are feasible due in part to the accordion style decoupling grooves 24 in the upper sidewall enabling the tire engineer to select the tread shape most preferred for the particular application. External radii of curvature Rₑ in the tread shoulder are also clearly within the possible mold shapes.

As shown in Fig. 6, the thickness of the shoulder rib 25A was increased from a radial thickness (t) of 0.58 inches (15 mm) to a radial thickness (t max) of 0.65 inches (16.5 mm) yielding an increase of about 0.07 inches (2 mm). The external radius of curvature Re was set at 35 inches (89 cm). In this configuration improved shoulder wear at edge 27 was confirmed, however, noticeable erosion wear problem was observed adjacent groove 22.

As illustrated in Figure 7, by changing the Re radius to 999 inches (25.3 m) the increase in (t max) relative to (t) was reduced to 0.04 inches (1 mm). This small adjustment permits the tread 20 to wear most uniformly at both edges of the shoulder rib 25A. As can be seen from the foregoing, a small change in the shape of the tread curvature as molded can lead to major benefits in improved wear rates.

Ideally the decoupling grooves 24 are positioned at a radial height at or below the edges of the belt structure as is illustrated. Under normal load the grooves 24 compress slightly causing the tread to exhibit a lower contact pressure at the tread ribs 25A and reduce torquing of the shoulder rib. While it may be possible to sufficiently compress one large decoupling groove 24 at these locations, it is believed far superior to use two, preferably three or more such grooves 24. These small grooves 24 preferably have an end formed by a full radius R_{G}, the full radius R_{G} extending a fixed or predetermined distance (d) inwardly toward the underlying plies 18. Preferably the decoupling groove 24 closest to the tread is located in the range of 0.0 inches (0 cm) to 1.5 inches (3.7 cm) radially inward of the radially outermost belt edge, more preferably about 1.0 inches (2.54 cm).

As the tire rotates under load, the decoupling grooves 24 compress in an action similar to an "accordion". This ability to compress in a series of grooves greatly facilitate the ability of the tread to maintain its shape in turning and cornering maneuvers.

The tread 20 at the axially outer portion of the tread shoulder rib 25A has a treadwall 29. The treadwall 29 as shown may include an radially outer chamfered surface 28 extending to the edge 27. As shown, this portion of the tread shoulder rib 25A lies radially outward of the sidewall decoupling grooves 24.

As the tread 20 wears, the edge 27 moves axially outward along the chamfer 28. This feature enables the tread to compensate for wear in that tread elements as they wear generally get stiffer. As the edge 27 wears, it moves outwardly. The edge 27 moves over more of the sidewall decoupling grooves. This means the stiffness increase due to wear is to a large extent dampened or minimized. Additionally, as the edge 27 moves outwardly, the surface area 26 of the rib 25A also increases in width. This means the contact pressure can actually reduce slightly as the tread 20 wears.

As shown in Figure 5, when the tread is new the footprint or contact path of the tire exhibits a contact pressure as measured along a line C spaced equidistant between a leading edge and a trailing edge of the tires normally loaded and normally inflated static condition. The normally inflated condition as used herein means the design inflation pressure P_{N}. At the edge 27 of rib 25A intersecting the line C a contact pressure P₃ is shown. On the opposite side of the rib 25A adjacent the groove 22 intersecting line C a contact pressure P₁ is shown. On the opposite groove wall of adjacent rib 25 along the line C a contact pressure P₂ is shown. These contact pressures can be adjusted by elevating the edge 27 relative to the contour of the central portion of the tread 20 as defined by the radius Rᵢ as discussed earlier.

An important feature of the preferred embodiment tire is that the axial widths W_{C} of the tread ribs 25 are actually smaller in width than the axial width W_{S} of the shoulder ribs 25A. These are average widths as measured halfway across each respective tread rib 25 and ribs 25A. Preferably W_{S} of the shoulder ribs 25A are at least 10% greater in width than the central ribs 25 width W_{C}. This feature helps insure the shoulder ribs 25A can have an overall lower pressure distribution than the central ribs portion of the tread. Ideally the shoulder ribs 25A have a contact pressure equal to or less than the central ribs 25. The contact pressure of the shoulder ribs should be less than the inflation pressure P_{N} while the central ribs contact pressure is equal to or greater than the pressure P_{N}. All of these pressure distribution relationships are achieved by a combination of tread arc curvatures, rib width variations and the unique sidewall decoupling grooves 24. The sidewall decoupling grooves 24 enable the tire designer to stiffen or soften the tread edge 27 by simply adjusting the number of grooves 24, their radial location or their axial extent. These features can be tuned individually or collectively to enhance tire performance and tread wear. This is very beneficial in several ways not the least of which is achieving a more durable tread that wears uniformly without requiring a tread decoupling rib which had been considered the most reliable way to design a tread for a steer tire.

As shown the radial location of the grooves 24 can be at the location of the belts 15 as in Figures 1 and 6 or radially below the belts 15 as in Figure 7.

A second and even more important feature is the decoupling grooves 24 are located below the tread buff line 90 as shown in Figs 1,6, and 7. This facilitates retreading. Currently in most commercial truck tire applications retreaded tires are not used in the front steer wheel position. This is because the single wheel position of the each steer axle means that a tread separation or sudden loss of pressure can be more problematic when compared to a dual wheel position axle such as the drive axles or the trailer axles.

As the reliability in commercial truck tire retreading improves and with new advances in rims and tires and associated bead restraining devices, this accepted practice will change wherein retreaded steer tires are not only accepted, but are likely preferred because the casing has a proven capability. Built-in sensors will tell the retreader if the tire has ever been exposed to excessive heat due to overloading or operating underinflated. Having these new capabilities means that ideally the decoupling of the tread from the sidewall should occur below the tread area. The "accordion style" decoupling grooves of the present invention allows this feature to be part of the casing. Unlike any other concept used to date, this feature will be perfectly positioned after retreading because it was molded into the casing originally and is never changed after retreading.

A third important point of the present invention is that this form of decoupling is very complimentary for use on the drive axle and trailer axle position when the tire is retreaded. In other words, even if the wheel axle position is changed, there appears to be no negative consequences. This is true because unlike most rib type tread decoupling concepts, there is no small appendages of rubber to cut or tear.

In essence the entire invention principle achieved by the use of sidewall decoupling grooves 24 resides in the desensitization of the shoulder pressure to varying loads. The loads of a steer axle tire vary due to the vertical and lateral movements of the tire. The prior art tires exhibit a higher sensitivity of shoulder pressure to load variation when compared to the tire of the present invention.

A 295/75R22.5 tire having been inflated to 120 psi (827 kPa) was tested with one wide sidewall decoupling groove 24 and a control tire without a decoupling groove was tested for contact pressure change as a function of load variations between 5400 lbs. and 6600 lbs (2450 to 2993 kg). The pressure variation for the control tire was 118 to 162 psi (814 to 1117 kPa) and the test tire the contact pressure at the shoulder edge was 58 to 82 psi (400 to 565 kPa). The rate of change was 0.040 versus 0.022 psi/lb (606 versus 335 Pa/kg) meaning the desensitized invention tire had about half the sensitivity of the control tire.

Naturally the lower contact pressure achieved at the edge can be advantageous in some cases as well, but in other cases it may be beneficial to increase the contact pressure at location P₃. The decoupling grooves 24 allow the engineer to achieve these benefits as well as was noted earlier.

The inventive concept, while feasible to demonstrate in a single wide groove in the sidewall, is believed to be most practical in a tire having 2, 3, 4 or more of the grooves 24.

## Claims

1. A radial ply pneumatic tire (10) for the steer axle of a commercial truck comprising a casing (12), the casing having at least one radial ply (18) extending to a pair of radially inner beads (13) and having belt reinforcing structures (15) disposed radially outward of the radial ply, a tread (20) disposed radially outward of the casing; the tire comprising a tread having a pair of shoulder tread ribs (25A), each shoulder rib having an axially outer treadwall (29); and a pair of sidewalls (16), one sidewall extending radially inwardly from each shoulder rib (25A) toward each radially inner bead (13), wherein each sidewall has at least two circumferentially continuous tread decoupling grooves (24) located radially at or inward of the belt reinforcing structure, **characterized in that** the decoupling groove (24) closest the tread (20) is located in the range of 0 inch (0 mm) to 1.5 inches (37 mm) radially inward of the radially outermost belt edge.

2. The tire (10) of claim 1, wherein each decoupling groove (24) extends generally laterally inwardly a distance sufficient to be axially outward of the axially outer treadwall (29) of the tread (20) as measured at the radially outer surface (30) of the shoulder rib.

3. The tire (10) of claim 1 wherein the tread (20) has a plurality of central ribs (25), adjacent a circumferential groove (22), each central rib having an axial width W_{C}, and wherein each shoulder rib (25A) has an axial width W_{S}, W_{S} being at least 110% of W_{C}.

4. The tire (10) of claim 1 wherein the decoupling groove (24) closest the tread (20) is located at about 1 inch (25 mm) radially inward of the radially outermost belt edge..

5. The tire (10) of claim 1 having 3 decoupling grooves (24).

6. The tire (10) of claim 1 having 4 decoupling grooves (24).

## Patentansprüche

1. Ein Radial-Luftreifen (10) für die Lenkachse eines kommerziellen Lastkraftwagens, umfassend einen Mantel (12), wobei der Mantel wenigstens eine Radiallage (18), die sich zu einem Paar radial innerer Wülste (13) erstreckt, und eine radial auswärts von der Radiallage angeordnete Gürtelverstärkungsstruktur (15)aufweist, und eine radial auswärts von dem Mantel angeordnete Lauffläche (20); wobei der Reifen eine Lauffläche umfasst, welche ein Paar Schulterprofilrippen (25A) aufweist, wobei jede Schulterrippe (25A) eine axial äußere Laufflächenwand (29) hat ; und ein Paar Seitenwände (16), wobei eine Seitenwand sich radial nach innen von jeder Schulterrippe (25A) zu jedem radial inneren Wulst (13) erstreckt, wobei jede Seitenwand wenigstens zwei in Umfangsrichtung durchlaufende Laufflächen-Entkopplungsrillen (24) aufweist, die radial an oder einwärts von der Gürtelverstärkungsstruktur angeordnet sind, **dadurch gekennzeichnet, dass** die Entkopplungsrille (24) am dichtesten bei der Lauffläche (20) im Bereich von 0 Zoll (0 mm) bis 1,5 Zoll (37 mm) radial einwärts von der radial äußersten Gürtelkante angeordnet ist.

2. Der Reifen (10) von Anspruch 1, wobei jede Entkopplungsrille (24) sich generell seitwärts nach innen um einen Abstand erstreckt, der ausreicht, um axial auswärts von der axial äußeren Laufflächenwand (29) der Lauffläche (20) zu liegen, gemessen an der radial äußeren Oberfläche (30) der Schulterrippe.

3. Der Reifen (10) von Anspruch 1, wobei die Lauffläche (20) eine Vielzahl von Mittelrippen (25), benachbart zu einer umfangsgerichteten Rille (22), aufweist, wobei jede Mittelrippe eine axiale Breite W_{C} hat und wobei jede Schulterrippe (25A) eine axiale Breite W_{S} hat, wobei W_{S} wenigstens 110 % von W_{C} beträgt.

4. Der Reifen (10) von Anspruch 1, wobei die Entkopplungsrille (24) am dichtesten bei der Lauffläche (20) etwa 1 Zoll (25 mm) radial einwärts von der radial äußersten Gürtelkante angeordnet ist.

5. Der Reifen (10) von Anspruch 1, welcher 3 Entkopplungsrillen (24) aufweist.

6. Der Reifen (10) von Anspruch 1, welcher 4 Entkopplungsrillen (24) aufweist.

## Revendications

1. Bandage pneumatique à nappe radiale (10) pour l'essieu directeur d'un camion commercial, comportant une carcasse (12), la carcasse (12) possédant au moins une nappe radiale (18) s'étendant jusqu'à une paire de talons internes en direction radiale (13) et possédant une structure de renforcement de ceinture (15) disposée à l'extérieur de la nappe (18) en direction radiale, une bande de roulement (20) disposée à l'extérieur de la carcasse (12) en direction radiale, le bandage pneumatique comprenant une bande de roulement qui possède une paire de nervures de bande de roulement d'épaulement (25A), chaque nervure d'épaulement possédant une paroi de bande de roulement (29) externe en direction axiale ; et une paire de flancs (16), chaque flanc s'étendant vers l'intérieur, en direction radiale, à partir de chaque nervure d'épaulement (25A) en direction de chaque talon interne (13) en direction radiale, chaque flanc possédant au moins deux rainures de découplage de bande de roulement continues en direction circonférentielle disposées sur ou à l'intérieur de la structure de renforcement de ceinture, **caractérisé en ce que** la rainure de découplage (24) la plus proche de la bande de roulement (20) est disposée à une distance dans la plage de 0 pouce (0 mm) à 1,5 pouce (37 mm) vers l'intérieur, en direction radiale, du bord de ceinture situé le plus à l'extérieur en direction radiale.

2. Bandage pneumatique (10) selon la revendication 1, dans lequel chaque rainure de découplage (24) s'étend en général vers l'intérieur en direction latérale sur une distance suffisante pour venir se disposer à l'extérieur, en direction axiale, de la paroi de bande de roulement externe en direction axiale (29) de la bande de roulement (20), comme mesuré à la surface externe (30) en direction radiale de la nervure d'épaulement.

3. Bandage pneumatique (10) selon la revendication 1, dans lequel la bande de roulement (20) possède plusieurs nervures centrales (25), en position adjacente à la rainure circonférentielle (22), chaque nervure centrale possédant une largeur axiale W_{C}, et dans lequel chaque nervure d'épaulement (25) possède une largeur axiale W_{S}, W_{S} représentant au moins 110 % de W_{C}.

4. Bandage pneumatique (10) selon la revendication 1, dans lequel la rainure de découplage (24) la plus proche de la bande de roulement (20) est disposée à une distance d'approximativement 1 pouce (25 mm) à l'intérieur, en direction radiale, du bord de ceinture situé le plus à l'extérieur en direction radiale.

5. Bandage pneumatique (10) selon la revendication 1, possédant trois rainures de découplage (24).

6. Bandage pneumatique (10) selon la revendication 1, possédant quatre rainures de découplage (24).
